# EUROPEAN PATENT SPECIFICATION

(11) **EP 2 717 168 B1**
(45) Date of publication and mention of the grant of the patent: **09.08.2017**
(21) Application number: 12290338.8
(22) Date of filing: 05.10.2012
(51) Int. Cl.: G06F 13/38, H04B 10/80

(54) **Networks and method for reliable transfer of information between industrial systems**
Netzwerke und Verfahren für die zuverlässige Übertragung von Informationen zwischen Industriesystemen
Réseaux et procédé pour un transfert fiable d'informations entre des systèmes industriels

(43) Date of publication of application: 09.04.2014
(73) Proprietor: General Electric Technology GmbH, 5400 Baden (CH)
(72) Inventor: Tardy, Regis, 91140 Villejust (FR)
(74) Representative: General Electric Technology GmbH

(56) References cited:
- EP-A2- 0 093 578
- US-A- 4 878 726
- US-A1- 2004 052 518
- US-B2- 7 668 461

## Description

### TECHNICAL FIELD

The present disclosure relates to methods and systems for reliable transfer of information between industrial systems using optical network.

### BACKGROUND

Industrial setup may have a variety of systems such as control stations, machineries, and other components interconnected in a network. The network is used to transfer variety of information such as information related to process flow, telemetry information, and other monitoring and control information between the systems. Such systems of the industrial setup may be located at distance up to several kilometers (km) from each other.

In an exemplary scenario, communication channels, such as Ethernet based channels, are used for the transfer of the information between various systems of the industrial setup, through physical wires, such as copper or any other metal wire. However, such channels have a certain degree of latency, and are non-deterministic when the traffic of information increases between the systems. Further, such channels utilize addition network components and have limitation in terms of speed, latency, redundancy and security.

In some other exemplary scenarios, wireless transfer of information may also be utilized. However, apart from a costly implementation of wireless components, noise interference between various radio wave signals and in-circuit electrical signals becomes challenge in a wireless communication in industrial systems. Under these scenarios, there is increased usage of optical transmission of information that is typically free from electromagnetic noise, high in speed and low in loss for signal transmission. However, even in optical transmission of information, reliable, error free, and deterministic transfer of information are still important objectives in a network of the industrial systems.

EP 0093578 A2 describes a communications system which has a data highway made up of two optical communications channels forming a ring to interconnect stations whose signals are interfaced with the ring by an optical-electrical repeater.

US 4878726 A describes a single optical transmitter which can be an optical modulator such as a lithium niolate switch used to impress a digital signal on a CW optical beam to obtain two digital optical outputs. One output is normally used as the modulated line signal for one of two diversely routed paths. The other output, which is the complement of the modulated signal, is used as the modulated line signal for the other of the two diversely routed paths.

### SUMMARY

An object of the invention is to provide a fast and reliable transfer of information between systems deployed in industrial plants and processes. Another object of the disclosure is to provide a secure transfer of information between the systems and precluding need for change of a communication protocol while transfer of the information. Another object of the disclosure is to provide the transfer of information that is deterministic from a system transmitting the information to a system receiving the information.

The above noted and other objects may be achieved by a communication network as defined in independent claim 1. Another aspect of the invention is a method as defined in independent claim 8. Further embodiments of the invention are specified in the appended dependent claims. Further objects, advantages and features of the present disclosure will be apparent from the following detailed description and claims.

### BRIEF DESCRIPTION OF THE DRAWINGS

For a more complete understanding of example embodiments of the present disclosure, reference is now made to the following descriptions taken in connection with the accompanying drawings in which:
FIG. 1 illustrates an exemplary block diagram representation of a communication network for transfer of information, in accordance with an exemplary embodiment of the present invention;
FIG. 2 illustrates an exemplary block diagram representation of a communication network representing industrial systems and optical bus connections between them, in accordance with another exemplary embodiment of the present invention; and
FIG. 3 is a flowchart depicting a method for transfer of information between a plurality of industrial systems, in accordance with an exemplary embodiment of the present invention.

### DETAILED DESCRIPTION

In the following description, for purposes of explanation, numerous specific details are set forth in order to provide a thorough understanding of the present invention. It will be apparent, however, to one skilled in the art that the present invention. can be practiced without these specific details. In other instances, structures and devices are shown in block diagrams form only, in order to avoid obscuring the disclosure. Although the following description contains many specifics for the purposes of illustration, anyone skilled in the art will appreciate that many variations and/or alterations to said details are within the scope of the present invention as claimed. Broadly, embodiments of the present invention provide devices and methods for reliable and fast transfer of information between a plurality of industrial systems. Various embodiments use transfer of information through an optical communication network to achieve a fast data transfer, for example, upto 10 Giga bits (Gbits) per second. Various embodiments use a pair of optical fibre buses for the transfer of information from a system to another system of the plurality of industrial systems. A first bus of the pair is used to transfer an optical signal for the information (that is to be transferred, also referred to as 'actual information' in the description), additional information and a cyclic redundancy check (CRC) information corresponding to the information. The second bus of the pair is used to transfer a complement of the optical signal. At an optical receiver at the another system, reliability of the information transfer may be determined by matching signals received from both the buses whether the signals are complement to each other or not. Further, CRC information may further be used to detect any error in the receipt of the information at Input/Output (I/O) board of a system receiving the information. Various embodiments of the present invention provide coupling the optical buses from an optical emitter of the system upto an Input/Output (I/O) board of the another system, and the optical signals are transferred from the optical emitter to the I/O board in compliance with a single protocol. As any protocol conversion is not required, such transfer of information is protected from spying, and other security threats.

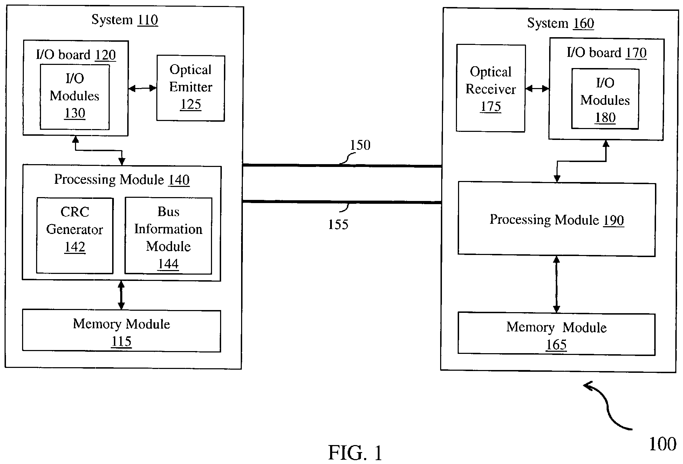

Referring now to FIG. 1, there is shown a block diagram representation of a communication network 100, in accordance with an exemplary embodiment of the present invention. The exemplary communication network 100 is illustrated for the sake of describing communication between a pair of industrial systems, for example, a system 110 and a system 160. Only two systems 110 and 160 are shown for the description purposes, and in actual setup, many more such systems may be present in the network 100. Further, it should be understood that the network 100 may include a variety of components for performing communication, and only those components are shown that are relevant for the description of various embodiments of the present invention. With reference to the FIG. 1, transfer of the information from the system 110 to the system 160 is described.

Examples of the information (that needs to be transferred from the system 110 to the system 160) may non-exhaustively include process flow information, telemetry information, and other monitoring and control information in industrial applications. Examples of the systems 110 and/or 160 include, but are not limited to, variety of electronic devices in power plants (for fuels types, such as hydro, nuclear, thermal, renewable, wastes, and the like), grid, transport, mining plants, plants related to petrochemical industrial applications, ore, fuels, paper, agro-food, mechanics, avionics, and the like. For instance, some examples of the systems 110 and 160 may include servers and other data repositories, buffers, repeaters, amplifiers, Distributed Control Systems (DCS), controllers, regulators, monitoring and diagnostic products, power electronic products, Supervisory Control and Data Acquisition (SCADA), controllers, electronic relays, protection products, measurement devices and communication devices.

Each of the systems 110 and 160 may include Input/Output (I/O) boards. These I/O boards of the systems 110 and 160 may include I/O modules and components for providing and receiving information from transmitters and/or receivers, so as to, perform signal transfer between the systems 110 and 160. The I/O boards may be embodied in at least one of a backplane of the systems 110 and 160, a Field Programmable Gate Array (FPGA), an Application Specific Integrated Circuit (ASIC), a System on Chip (SOC), a Micro-controller Unit (MCU), a Digital Signal Procession (DSP), an Electrically Programmable Logic Device (EPLC), Complex Programmable Logic Device (CPLD) configured in the systems 110 and 160.

Some exemplary I/O boards (for example, I/O boards 120 and 170) are shown in the systems 110 and 160 for the purposes of the present invention. The system 110 includes a transmitter (for example, an optical emitter 125) that may generate optical signals corresponding to electrical signals. The optical emitter 125 is configured to generate optical signals corresponding to the information that is to be transferred from the system 110 to the system 160. The system 160 includes an optical receiver 175 that is configured to receive the optical signals. The I/O boards 120 and 170 include I/O modules 130 and 180, respectively. It should be noted that the system 110 may also include an optical receiver similar to the optical receiver 175 and the system 160 may also include an optical emitter similar to the optical emitter 125 for transferring information from the system 160 to the system 110, and these components are not shown for the sake of brevity of this description. The I/O modules 130 and 180 are generic and allow different I/O module types to be mounted on a same base/plane, and are configured to provide the information (for example, the electrical signals) to be sent through the optical emitter 125, or to receive the information (for example, the electrical signals corresponding to the information) from an optical receiver, such as the optical receiver 175.

In an example, the network 100 includes a pair of optical buses (150, 155) for the transfer of the optical signals corresponding to the information between the systems 110 and 160. In an example, the optical buses 150 and 155 are serial buses and configured in parallel to each other. Examples of the optical buses 150 and 155 may include, but are not limited to, Optical Fibre Cable (OFC). The optical buses 150 and 155 may be coupled with the systems 110 and 160 for the transfer of the information between the systems 110 and 160. For instance, the optical buses 150 and 155 may be coupled with the systems 110 and 160 such that optical signals from the optical emitter 125 may be transferred to the optical receiver 175. As the processing modules 140 and 190 are coupled with the I/O boards 120 and 170, the information is transferred from the I/O board 120 (the emitter 125) to the optical receiver 175 of the I/O board 170 in compliance with a single protocol.

In various examples, the optical bus 150 (a first optical bus) is used to transfer an optical signal corresponding to the information (for example, the actual information that needs to be transferred), additional information and CRC information. In such examples, the optical bus 155 is used to transfer a complement of the optical signal corresponding to the information, the additional information and CRC information. For instance, the optical signal transmitted on the bus 155 is complement of the optical signal transmitted on the optical bus 150. As such, the optical signals transferred on the buses 150 and 155 are complementary, it may allow to crosscheck that the optical signals are correctly received at the optical receiver 175. In an embodiment, a bus information may also be transferred alongwith the CRC information, where the bus information represents an information of a master bus among the buses 150 and 155. For example, the bus 150 may be a master bus that is utilized to transfer information corresponding to the actual information, as the actual information may be received from signals received from the bus 150, at the optical receiver 175. The actual information is received after validation of the CRC and the complementary check for the information received from the master bus 150, by the processing module 190.

Each of the systems 110 and 160 may include processing modules for controlling the generation and/or transfer of optical signals that may be transmitted and/or received on the buses 150 and 155. For instance, a processing module 140 in the system 110 includes components for controlling the generation and/or transfer of the optical signals to be transferred over the buses 150 and 155. Examples of the processing module 140 may include a coprocessor, a microprocessor, discrete components, a micro-controller, a digital signal processor (DSP), processing circuitry with or without an accompanying DSP, or various other processing devices including integrated circuits such as, an ASIC, an FPGA, an EPLD, CPLD, an MCU, an SOC, or the like.

The processing module 140 may include a CRC generator 142 and a bus information module 144. The CRC generator 142 is configured to generate CRC information (for example, checksums) that is added with the actual information in compliance with an optical communication protocol. In an example, the optical signal corresponding to one or more CRC bits, the actual information, the additional information and a master bus information bit may be transferred in compliance with the optical communication protocol. In an example, the bus information module 144 is configured to generate a bus information bit, for example, an information bit representing a master bus among the buses 150 and 155. The processing module 140 is configured to provide the actual information alongwith the additional information, the CRC information and the bus information to the I/O board 120. In an example, the optical emitter 125 may generate an optical signal corresponding to the information, the additional information, the CRC information and the bus information. The optical signal is provided to the bus 150 for transferring the optical signal to the I/O board 170 of the system 160. In an example, a complement of the optical signal is also generated by the optical emitter 125, and the complementary optical signal is provided to the bus 155 for transferring the complementary optical signal to the I/O board 170.

It should be noted that at any time instant, the optical signal (that are received at the I/O board 170) may represent a set of the actual information, the additional information, the CRC information and the bus information for the master bus. Similarly, at any time instant, the complementary optical signal (that is received at the I/O board 170) represents a set of the complement of each of the actual information, the additional information, the CRC information and the master bus information.

In an example embodiment, the system 160 includes a processing module 190 that is configured to determine reliability of the receipt of the information by the optical receiver 175. For instance, a reliable information transfer may be determined by matching the signals received from the buses (150 and 155), so as to, determine whether the received signals are complement to each other or not. In an example, the optical receiver 175 converts the optical signal received from the bus 150 into a first received signal (in electrical form), and converts the complementary optical signal received from the bus 155 into a second received signal (in electrical form). The processing module 190 is configured to determine whether the first received signal and the second received signal are complement to each other to determine the reliability of the receipt of the actual information at the system 160. Further, the processing module 190 is configured to use the CRC information to detect any error in the receipt of the information at the system 160, using a CRC algorithm. Examples of the processing module 190 may also include a coprocessor, a microprocessor, discrete components, a micro-controller, a digital signal processor (DSP), processing circuitry with or without an accompanying DSP, or various other processing devices including integrated circuits such as, an ASIC, an FPGA, an EPLD, CPLD, an MCU, an SOC, or the like.

It should be noted that system 110 may also include an optical receiver such as the optical receiver 175, and the system 160 may also include an optical emitter such as the optical emitter 125, so as to perform transmission of information from the system 160 to the system 110. The processing module 140 is also configured to determine reliability of receipt of the information by the optical receiver. Similarly, the processing module 190 in the system 160 includes components for controlling the generation and/or transfer of the optical signals to be transferred via the buses 150 and 155. For instance, the processing module 190 may include a CRC generator such as the CRC generator 142 and a bus information module such as the bus information module 144, so as to perform transmission of the information from the system 160 to the system 110.

In an example, the systems 110 and 160 include memory modules to store the information that is to be transferred and/or received. For instance, the system 110 includes a memory module 115 for storing the information. The information stored in the memory module 115 may be provided to the I/O module 130 based on instructions received from the processing module 140. Further, the system 160 includes a memory module 165 to store the actual information received at the system 160. The memory modules 115 and/or 165 may be non-volatile memories. Some examples of the non-volatile memories may include, but are not limited to, programmable memory, erasable programmable memory, electrically erasable programmable memory, flash memory, hard disk, magnetic memory, any new non-volatile technologies and the like. In some examples, the memory modules 115 and/or 165 may also be volatile memories, such as Random Access Memory (RAM), Dynamic Random Access Memory (DRAM), Static Random Access Memory (SRAM), and the like. The CRC information and the bus information may be stored in additional buffers/storages devices, or in the memory module 115.

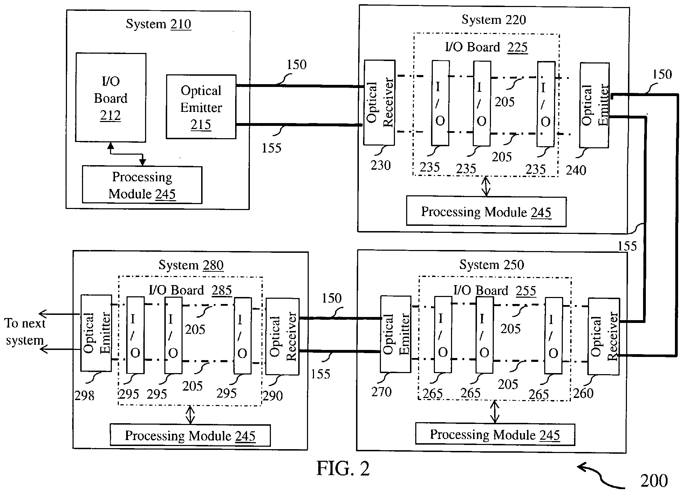

FIG. 2 illustrates a block diagram representation of a communication network 200 illustrating communication between various systems (210, 220, 250 and 280). Optical signals are transmitted between the systems 210, 220, 250 and 280 on a pair of optical buses, such as the buses 150 and 155. In the examples representation of FIG. 2, transfer of optical signals is described from the system 210 to the system 220, from the system 220 to the system 250 and thereafter from the system 250 to the system 280, and such description/representation should be construed as merely for the exemplary purposes, and should not be considered as limiting to the scope of the present disclosure. Each of the system 210, 220, 250, and 280 include a processing module 245. The processing module 245 may be an example of the processing modules 140 and/or 190. The processing module 245 includes components for controlling the generation and/or transfer of the optical signals to be transferred over the buses 150 and 155 between one or more pairs of the system 210, 220, 250 and 280. The processing module 245 is also configured to determine reliability of receipt of the information by an optical receiver of the corresponding system.

As shown in the exemplary embodiment of FIG. 2, the system 210 includes an I/O board 212. The I/O board 212 is configured to provide information (that is to be transmitted from the system 210) and additional information (for example, the CRC information and the master bus information) to an optical emitter 215. The optical emitter 215 is configured to generate optical signals for transferring via the buses 150 and 155. The optical emitter 215 may be an example of the optical emitter 125. The optical emitter 215 is configured to generate the optical signal corresponding to the information, the additional information, the CRC information and the bus information for the master bus among the buses 150 and 155. As explained in reference to FIG. 1, one of the pair of optical buses 150 and 155, for instance, the bus 155 may be a redundant bus. In certain embodiments, the optical signal is transmitted on the bus 150, and a complementary optical signal is transmitted on the bus 155. Herein, the optical signal corresponding to each of the information, the additional information, the CRC information and the bus information is termed as a 'first optical signal', and the complementary optical signal corresponding to each of the information and the additional information is termed as a 'second optical signal'. In an example, if an information bit is '1', the first optical signal corresponding to bit '1' is transferred on the bus 150 and the second optical signal corresponding to bit '0' is transferred on the bus 155. Such complementary transmission of the information on the buses 150 and 155 may allow for crosschecking whether the information is received correctly at a receiving system (for example, at the systems 220, 250 and 280), as the bits received from both the buses 150 and 155 should be complementary to each other, so as to determine a correct receipt of the information. It should be understood that at the receiving system, the actual information may be retrieved based on the optical signals received by any of the buses 150 and 155 based on the bus information of the master bus among the buses 150 and 155.

The buses 150 and 155 are coupled to the optical emitters/optical receivers (that are coupled with the I/O boards) of a pair of systems, so as to transmit/receive the first and second optical signals. For instance, the buses 150 and 155 are coupled between the I/O board 212 of the systems 210 and the I/O board 225 of the systems 220 for transfer of the information between the systems 210 and 220. As shown in FIG. 2, the system 220 includes an optical receiver 230 configured to receive the first and second optical signals (corresponding to the information provided by the I/O board 212) from the buses 150 and 155, respectively.

The optical receiver 230 converts the first and second optical signals into the first and second electrical signals. The optical receiver 230 is coupled with the plurality of I/O modules 235 through wired connection, such as a copper wire 205 or any other metallic wire. It should be noted that the actual information may be retrieved from any of the first electrical signal and the second electrical signal by the I/O modules 235. As described in reference to FIG. 1, reliability of receipt of the information may be checked by determining whether the first electrical signal and the second electrical signal are complementary. The system 220 includes the processing module 245 to check whether the actual information is received correctly by the I/O board 225 by using the CRC algorithm.

The system 220 may further include an optical emitter 240 (coupled with the I/O board 225) to generate the first and second optical signals (from the first and second electrical signals) and transfers these signals to an optical receiver 260 of the system 250, through the buses 150 and 155. The optical receiver 260 is coupled with an I/O board 255 of the system 250, and upon receiving the first and the second optical signals, the optical receiver 260 provides the corresponding electrical signals to I/O modules 265 of the I/O board 255. The system 250 is further shown to include an optical emitter 270 (coupled with the I/O board 255) to transfer the first and second optical signals to an I/O board 285 of the system 280. An optical receiver 290 (coupled with the I/O board 285) of the system 280 receives the first and the second optical signals, and corresponding electrical signals are provided to I/O modules 295. The system 280 include the processing module 245 to check whether the actual information is received correctly at the I/O modules 295, and the actual information may be retrieved from the electrical signals at the I/O modules 295. As shown in FIG. 2, the system 280 further includes an optical emitter 298 for transferring the optical signals to a next system via the buses 150 and 155.

It should be understood that the I/O modules (235, 265 and 295) of the systems 220, 230 and 240 are coupled with or without optical transmission links. For instance, each of such I/O modules, among themselves, may communicate through a pair of copper links (such as wires), and the like. An exemplary representation of the copper wire 205 is shown in FIG. 2.

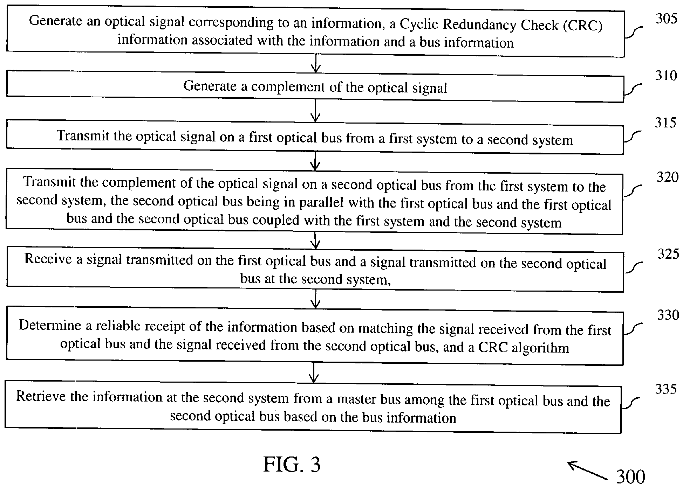

FIG. 3 is a flowchart depicting a method 300 for communication between a plurality of industrial systems, in accordance with an exemplary embodiment of the present invention. The method 300 depicted in the flow chart may be executed in a communication network such as communication networks 100 and/or 200 of FIGS. 1 and 2. Operations of the flowchart, and combinations of operation in the flowchart, may be implemented by various means, such as hardware, firmware, computing device, circuitry and/or other device associated with execution of software including one or more computer program instructions. To facilitate discussions of the method 300 of FIG. 3, certain operations are described herein as constituting distinct steps performed in a certain order. Such implementations are examples only and non-limiting in scope. Certain operation may be grouped together and performed in a single operation, and certain operations can be performed in an order that differs from the order employed in the examples set forth herein.

As shown in the FIG. 3, the operations 305-335 are performed between a pair of industrial systems. More specifically, the operations 305-320 are performed at a system that transfers the information and the operations 325-335 are performed at a system that receives the information.

At 305, the method 300 includes generating an optical signal comprising an information (for example, an actual information that is to be transferred) and a CRC information associated with the information. In an embodiment, optical signal may also comprise signal corresponding to a bus information. The bus information is associated with a master bus among a pair of buses and status of buses. At 310, the method 300 includes generating a complementary optical signal.

At 315, the method 300 includes transmitting the optical signal on a first optical bus from a first system to a second system of the plurality of industrial systems. An example of the first system may be the system 110, and an example of the second system may be the system 160. Examples of the first system may also be any of the systems 210, 220, 250 and 280, and the examples of the second system may also be any of the systems 220, 250 and 280. At 320, the method 300 includes transmitting the complementary optical signal on a second optical bus from the first system to the second system. The second optical bus is in parallel with the first optical bus, and both the buses are serial buses. Examples of the first and second optical buses may be the buses 150 and 155, as described in reference to FIGS. 1 and 2. The first optical bus and the second optical bus are coupled with I/O boards of the first system and the second system via optical receivers and/or optical emitters in the corresponding systems.

In some examples, the method 300 includes transferring a bus information alongwith the information and the CRC information. The bus information may be generated based on information of a master bus from the first optical bus and the second optical bus. In an example, a bus on which the information is used by the optical receiver may be considered as the master bus.

In some examples, the method 300 further includes receiving a signal transmitted on the first optical bus and a signal transmitted on the second optical bus at the second system, at 325. For instance, the method 300 includes receiving the optical signal from the first optical bus and receiving the complementary optical bus from the second optical bus. Further, at 330, the method 300 includes determining a reliable receipt of the information based on matching the signal received from the first optical bus and the signal received from the second optical bus, and also based on a CRC algorithm. For instance, reliability of the receipt of the information may be checked by determining the complementarity of signals received on both the buses. Further, the CRC information may be used to detect any error in the received signals. Further, at 335, using the bus information, the information may be retrieved at the second system from the master bus among the both buses.

### LIST OF REFERENCE SYMBOLS

- 100: Communication Network
- 110, 160: Systems of the communication network 100
- 115: Memory module of the system 110
- 120: I/O board of the system 110
- 125: Optical emitter of the system 110
- 130: I/O modules of the system 110
- 140: Processing module of the system 110
- 142: CRC generator
- 144: Bus information module
- 150: First optical bus
- 155: Second optical bus
- 165: Memory module of the system 160
- 170: I/O board of the system 160
- 175: Optical receiver of the system 160
- 180: I/O module of the system 160
- 190: Processing module of the system 160
- 200: Communication network
- 210, 220, 250, 280: Systems of the communication network 200
- 205: Copper wire
- 212: I/O board of the system 210
- 215: Optical emitter of the system 210
- 225: I/O board of the system 220
- 230: Optical receiver of the system 220
- 235: I/O modules of the system 220
- 240: Optical emitter of the system 220
- 245: Processing module
- 255: I/O board of the system 250
- 260: Optical receiver of the system 250
- 265: I/O modules of the system 250
- 270: Optical emitter of the system 250
- 285: I/O board of the system 280
- 290: Optical receiver of the system 280
- 295: I/O modules of the system 280
- 298: Optical emitter of the system 280

## Claims

1. A communication network (100; 200) for transfer of information between industrial systems, the communication network (100; 200) comprising:
a plurality of industrial systems (110, 160; 210, 220, 250, 280), each system of the plurality of industrial systems (110, 160; 210, 220, 250, 280) comprising:
at least one of an optical emitter (125; 215, 240, 270, 298) and an optical receiver (175; 230, 260, 290);
an Input/ Output I/O board (120, 170; 212, 225, 255, 285) comprising at least one I/O module (130, 180; 235, 265, 295); and
a processing module (140, 190; 245) coupled with the I/O board (120, 170; 212, 225, 255, 285), the processing module (140, 190; 245) and the I/O board (120, 170; 212, 225, 255, 285);
a first optical bus (150) coupled with the at least one of an optical emitter and an optical receiver of one or more pairs of systems of the plurality of industrial systems (110, 160; 210, 220, 250, 280) for transferring the optical signal between the one or more pairs of systems, at any time instant, the optical signal represents a set of the actual information; and
a second optical bus (150) coupled with the at least one of the optical emitter and the optical receiver of the one or more pairs of systems for transferring a complement of the optical signal between the one or more pairs of systems, at any time instant, the complementary optical signal represents a set of the complement of each of the actual information, **characterized in that**
the processing module (140, 190; 245) is configured to generate an optical signal corresponding to an information and a Cyclic Redundancy Check CRC information associated with the information and to determine a reliable receipt of the information based on matching a signal received from the first optical bus (150) and a signal received from the second optical bus (155), and a CRC algorithm.

2. The communication network (100; 200) as claimed in claim 1, wherein the processing module (140, 190; 245) comprises:
a CRC generator (142) configured to generate the CRC information; and
a bus information module (144) configured to the generate a bus information based on a master optical bus from the first optical bus (150) and the second optical bus (155).

3. The communication network (100; 200) as claimed in claim 1, wherein each of the first optical bus (150) and the second optical bus (155) is an optical fibre cable.

4. The communication network (100; 200) as claimed in claim 1, wherein each of the first optical bus (150) and the second optical bus (155) is a serial bus.

5. The communication network (100; 200) as claimed in claim 1, wherein the first optical bus (150) and the second optical bus (155) are arranged in a parallel configuration.

6. The communication network (100) as claimed in claim 1, wherein at least one of the plurality of industrial systems (110, 160) comprises at least one memory module (115, 165) to store the information.

7. The communication network (100; 200) as claimed in claim 1, wherein I/O modules of each of the at least one I/O module (235, 265, 295) are coupled through a copper wire (205).

8. A method for transfer of information between a plurality of industrial systems (110, 160; 210, 220, 250, 280), the method comprising:
generating an optical signal corresponding to an information;
generating a complement of the optical signal;
transmitting the optical signal on a first optical bus (150) from a first system (110, 160; 210, 220, 250, 280) to a second system (110, 160; 210, 220, 250, 280) of the plurality of industrial systems (110, 160; 210, 220, 250, 280), at any time instant, the optical signal represents a set of the actual information; and
transmitting the complement of the optical signal on a second optical bus (155) from the first system (110) to the second system (160), at any time instant, the complementary optical signal represents a set of the complement of each of the actual information, the second optical bus (155) being in parallel with the first optical bus (150) and the first optical bus (150) and the second optical bus (155) coupled with an I/O board (120, 170; 212, 225, 255, 285) of the first system (110, 160; 210, 220, 250, 280) and an I/O board (120, 170; 212, 225, 255, 285) of the second system (110, 160; 210, 220, 250, 280),
receiving a signal transmitted on the first optical bus (150) and a signal transmitted on the second optical bus (155) at the second system (110, 160; 210, 220, 250, 280), **characterized in** generating a Cyclic Redundancy Check CRC information associated with the information, and
determining a reliable receipt of the information based on matching the signal received from the first optical bus (150) and the signal received from the second optical bus (155), and a CRC algorithm.

9. The method as claimed in claim 8, wherein the optical signal further corresponds to a bus information, the bus information generated based on a master optical bus from the first optical bus (150) and the second optical bus (155).

10. The method as claimed in claim 9, further comprising retrieving the information from one of the optical signal and the complementary optical signal based on the bus information.

11. The method as claimed in claim 8, wherein each of the first optical bus (150) and the second optical bus (155) is an optical fibre cable.

12. The method as claimed in claim 8, wherein each of the first optical bus (150) and the second optical bus (155) is a serial bus.

13. The method as claimed in claim 8, wherein the first optical bus (150) and the second optical bus (155) are arranged in a parallel configuration.

## Patentansprüche

1. Kommunikationsnetzwerk (100; 200) für die Übertragung von Informationen zwischen Industriesystemen, das Kommunikationsnetzwerk (100; 200) umfassend:
eine Vielzahl von Industriesystemen (110, 160; 210, 220, 250, 280), wobei jedes System der Vielzahl von Industriesystemen (110, 160; 210, 220, 250, 280) umfasst:
einen optischen Sender (125; 215, 240, 270, 298) und/oder einen optischen Empfänger (175; 230, 260, 290); eine E/A-Platine (120, 170; 212, 225, 255, 285), die mindestens ein E/A-Modul (130, 180; 235, 265, 295) umfasst; und
ein Verarbeitungsmodul (140, 190; 245), das mit der E/A-Platine (120, 170; 212, 225, 255, 285), dem Verarbeitungsmodul (140, 190; 245) und der E/A-Platine (120, 170; 212, 225, 255, 285) gekoppelt ist;
einen ersten optischen Bus (150), der mit dem optischen Sender und/oder dem optischen Empfänger eines oder mehrerer Paare von Systemen der Vielzahl von Industriesystemen (110, 160; 210, 220, 250, 280) gekoppelt ist, um das optische Signal zwischen dem einen oder den mehreren Paaren von Systemen zu übertragen, wobei das optische Signal zu jedem beliebigen Zeitpunkt einen Satz der tatsächlichen Information darstellt; und
einen zweiten optischen Bus (150), der mit dem optischen Sender und/oder dem optischen Empfänger des einen oder der mehreren Paare von Systemen verbunden ist, um ein Komplement des optischen Signals zwischen dem einen oder den mehreren Paaren von Systemen zu übertragen, wobei das komplementäre optische Signal zu jedem beliebigen Zeitpunkt einen Satz des Komplements jeder der tatsächlichen Informationen darstellt, **dadurch gekennzeichnet, dass**
das Verarbeitungsmodul (140, 190; 245) konfiguriert ist, um ein optisches Signal, das einer Information entspricht, und eine der Information zugeordnete zyklische Redundanzprüfungs (Cyclic Redundancy Check, CRC)-Information zu erzeugen und einen zuverlässigen Empfang der Information basierend auf einem Übereinstimmen eines Signals, das von dem ersten optischen Bus (150) empfangen wird, und eines Signals, das von dem zweiten optischen Bus (155) empfangen wird, und einem CRC-Algorithmus zu bestimmen.

2. Kommunikationsnetzwerk (100; 200) nach Anspruch 1, wobei das Verarbeitungsmodul (140, 190; 245) umfasst:
einen CRC-Generator (142), der konfiguriert ist, um die CRC-Information zu erzeugen; und
ein Businformationsmodul (144), das konfiguriert ist, um eine Businformation basierend auf einem übergeordneten optischen Bus des ersten optischen Busses (150) und des zweiten optischen Busses (155) zu erzeugen.

3. Kommunikationsnetzwerk (100; 200) nach Anspruch 1, wobei sowohl der erste optische Bus (150) als auch der zweite optische Bus (155) ein faseroptisches Kabel sind.

4. Kommunikationsnetzwerk (100, 200) nach Anspruch 1, wobei sowohl der erste optische Bus (150) als auch der zweite optische Bus (155) ein serieller Bus sind.

5. Kommunikationsnetzwerk (100, 200) nach Anspruch 1, wobei der erste optische Bus (150) und der zweite optische Bus (155) in einer parallelen Konfiguration angeordnet sind.

6. Kommunikationsnetzwerk (100) nach Anspruch 1, wobei mindestens eines der Vielzahl von Industriesystemen (110, 160) mindestens ein Speichermodul (115, 165) zum Speichern der Information umfasst.

7. Kommunikationsnetzwerk (100, 200) nach Anspruch 1, wobei die E/A-Module jedes der mindestens einen E/A-Module (235, 265, 295) über einen Kupferdraht (205) gekoppelt sind.

8. Verfahren für die Übertragung von Informationen zwischen einer Vielzahl von Industriesystemen (110, 160; 210, 220, 250, 280), das Verfahren umfassend:
Erzeugen eines optischen Signals, das einer Information entspricht;
Erzeugen eines Komplements des optischen Signals; Übertragen des optischen Signals auf einem ersten optischen Bus (150) eines ersten Systems (110, 160; 210, 220, 250, 280) an ein zweites System (110, 160; 210, 220, 250, 280) der Vielzahl von Industriesystemen (110, 160; 210, 220, 250, 280), wobei das optische Signal zu jedem beliebigen Zeitpunkt einen Satz der tatsächlichen Informationen darstellt; und
Übertragen des Komplements des optischen Signals auf einem zweiten optischen Bus (155) von dem ersten System (110) an das zweite System (160), wobei das komplementäre optische Signal zu jedem beliebigen Zeitpunkt einen Satz des Komplements der tatsächlichen Information darstellt, der zweite optische Bus (155) parallel zu dem ersten optischen Bus (150) ist und der erste optische Bus (150) und der zweite optische Bus (155) mit einer E/A-Platine (120, 170; 212, 225, 255, 285) des ersten Systems (110, 160; 210, 220, 250, 280) und einer E/A-Platine (120, 170; 212, 225, 255, 285) des zweiten Systems (110, 160; 210, 220, 250, 280) gekoppelt sind;
Empfangen eines auf dem ersten optischen Bus (150) übertragenen Signals und eines auf dem zweiten optischen Bus (155) auf dem zweiten System (110, 160; 210, 220, 250, 280) übertragenen Signals, durch Folgendes gekennzeichnet
Erzeugen einer zyklischen Redundanzprüfungs(Cyclic Redundancy Check, CRC)-Information, die der Information zugeordnet ist, und
Bestimmen eines zuverlässigen Empfangs der Information basierend auf der Übereinstimmung des von dem ersten optischen Bus (150) empfangenen Signals und des von dem zweiten optischen Bus (155) empfangenen Signals und eines CRC-Algorithmus.

9. Verfahren nach Anspruch 8, wobei das optische Signal ferner einer Businformation entspricht, wobei die Businformation basierend auf einem übergeordneten optischen Bus des ersten optischen Busses (150) und des zweiten optischen Busses (155) erzeugt wird.

10. Verfahren nach Anspruch 9, ferner umfassend
Abrufen der Information von einem der optischen Signale und des komplementären optischen Signals basierend auf der Businformation.

11. Verfahren nach Anspruch 8, wobei sowohl der erste optische Bus (150) als auch der zweite optische Bus (155) ein faseroptisches Kabel sind.

12. Verfahren nach Anspruch 8, wobei sowohl der erste optische Bus (150) als auch der zweite optische Bus (155) ein serieller Bus sind.

13. Verfahren nach Anspruch 8, wobei der erste optische Bus (150) und der zweite optische Bus (155) in einer parallelen Konfiguration angeordnet sind.

## Revendications

1. Réseau de communication (100 ; 200) pour le transfert d'informations entre des systèmes industriels, le réseau de communication (100 ; 200) comprenant :
une pluralité de systèmes industriels (110, 160 ; 210, 220, 250, 280), chaque système de la pluralité de systèmes industriels (110, 160 ; 210, 220, 250, 280) comprenant :
au moins l'un d'un émetteur optique (125 ; 215, 240, 270, 298) et d'un récepteur optique (175 ; 230, 260, 290) ;
une carte d'entrée/sortie, E/S, (120, 170 ; 212, 225, 255, 285) comprenant au moins un module d'E/S (130, 180 ; 235, 265, 295) ; et
un module de traitement (140, 190 ; 245) couplé à la carte d'E/S (120, 170 ; 212, 225, 255, 285), le module de traitement (140, 190 ; 245) et la carte d'E/S (120, 170 ; 212, 225, 255, 285) ;
un premier bus optique (150) couplé audit au moins l'un d'un émetteur optique et d'un récepteur optique d'une ou plusieurs paires de systèmes de la pluralité de systèmes industriels (110, 160 ; 210, 220, 250, 280) pour transférer le signal optique entre lesdites une ou plusieurs paires de systèmes, à tout moment donné, le signal optique représentant un ensemble des informations réelles ; et
un second bus optique (150) couplé audit au moins l'un de l'émetteur optique et du récepteur optique desdites une ou plusieurs paires de systèmes pour transférer un complément du signal optique entre lesdites une ou plusieurs paires de systèmes, à tout moment donné, le signal optique complémentaire représentant un ensemble du complément de chacune des informations réelles, **caractérisé en ce que**
le module de traitement (140, 190 ; 245) est configuré pour générer un signal optique correspondant à des informations et des informations de contrôle de redondance cyclique CRC associées aux informations, et pour déterminer une réception fiable des informations sur la base de l'appariement d'un signal reçu à partir du premier bus optique (150) et d'un signal reçu à partir du second bus optique (155), et d'un algorithme de CRC.

2. Réseau de communication (100 ; 200) selon la revendication 1, dans lequel le module de traitement (140, 190 ; 245) comprend :
un générateur de CRC (142) configuré pour générer les informations de CRC ; et
un module d'informations de bus (144) configuré pour générer des informations de bus sur la base d'un bus optique maître à partir du premier bus optique (150) et du second bus optique (155).

3. Réseau de communication (100 ; 200) selon la revendication 1, dans lequel chacun du premier bus optique (150) et du second bus optique (155) est un câble à fibre optique.

4. Réseau de communication (100 ; 200) selon la revendication 1, dans lequel chacun du premier bus optique (150) et du second bus optique (155) est un bus série.

5. Réseau de communication (100 ; 200) selon la revendication 1, dans lequel le premier bus optique (150) et le second bus optique (155) sont agencés dans une configuration parallèle.

6. Réseau de communication (100) selon la revendication 1, dans lequel au moins l'un de la pluralité de systèmes industriels (110, 160) comprend au moins un module de mémoire (115, 165) pour stocker les informations.

7. Réseau de communication (100 ; 200) selon la revendication 1, dans lequel des modules d'E/S de chacun dudit au moins un module d'E/S (235, 265, 295) sont couplés au moyen d'un fil de cuivre (205).

8. Procédé de transfert d'informations entre une pluralité de systèmes industriels (110, 160 ; 210, 220, 250, 280), le procédé comprenant de :
générer un signal optique correspondant à des informations ;
générer un complément du signal optique ;
transmettre le signal optique sur un premier bus optique (150) à partir d'un premier système (110, 160 ; 210, 220, 250, 280) à un second système (110, 160 ; 210, 220, 250, 280) de la pluralité de systèmes industriels (110, 160 ; 210, 220, 250, 280), à tout moment donné, le signal optique représentant un ensemble des informations réelles ; et
transmettre le complément du signal optique sur un second bus optique (155) à partir du premier système (110) au second système (160), à tout moment donné, le signal optique complémentaire représentant un ensemble du complément de chacune des informations réelles, le second bus optique (155) étant en parallèle au premier bus optique (150) et le premier bus optique (150) et le second bus optique (155) étant couplés à une carte d'E/S (120, 170 ; 212, 225, 255, 285) du premier système (110, 160 ; 210, 220, 250, 280) et une carte d'E/S (120, 170 ; 212, 225, 255, 285) du second système (110, 160 ; 210, 220, 250, 280),
recevoir un signal transmis sur le premier bus optique (150) et un signal transmis sur le second bus optique (155) au niveau du second système (110, 160 ; 210, 220, 250, 280), **caractérisé par** :
la génération d'informations de contrôle de redondance cyclique CRC associées aux informations, et
la détermination d'une réception fiable des informations en fonction de l'appariement du signal reçu à partir du premier bus optique (150) et du signal reçu à partir du second bus optique (155) et d'un algorithme de CRC.

9. Procédé selon la revendication 8, dans lequel le signal optique correspond en outre à des informations de bus, les informations de bus étant générées sur la base d'un bus optique maître à partir du premier bus optique (150) et du second bus optique (155).

10. Procédé selon la revendication 9, comprenant en outre de
récupérer les informations à partir de l'un du signal optique et du signal optique complémentaire sur la base des informations de bus.

11. Procédé selon la revendication 8, dans lequel chacun du premier bus optique (150) et du second bus optique (155) est un câble à fibre optique.

12. Procédé selon la revendication 8, dans lequel chacun du premier bus optique (150) et du second bus optique (155) est un bus série.

13. Procédé selon la revendication 8, dans lequel le premier bus optique (150) et le second bus optique (155) sont agencés dans une configuration parallèle.
